# EUROPÄISCHE PATENTSCHRIFT

(11) **EP 0 628 192 B1**
(45) Veröffentlichungstag und Bekanntmachung des Hinweises auf die Patenterteilung: **10.01.1996**
(21) Anmeldenummer: 93903839.4
(22) Anmeldetag: 25.02.1993
(51) Int. Cl.: G07F 17/32, G07F 7/08

(54) **SPIELGERÄTESYSTEM MIT GELDVERARBEITUNGSZENTRALE**
GAME MACHINE SYSTEM WITH MONEY PROCESSING STATION
SYSTEME DE MACHINES A SOUS AVEC CENTRALE DE MANIPULATION D'ARGENT

(30) Priorität: 26.02.1992 DE 4205791
(43) Veröffentlichungstag der Anmeldung: 14.12.1994
(73) Patentinhaber: NSM AKTIENGESELLSCHAFT, D-55411 Bingen (DE)
(72) Erfinder: SCHULZE, Ullrich, D-6200 Wiesbaden (DE); NIEDERLEIN, Horst, D-55411 Bingen (DE); PICKARDT, Hans Joachim, D-55411 Bingen (DE)
(74) Vertreter: Becker, Bernd, Dipl.-Ing.
(86) Internationale Anmeldenummer: DE9300178
(87) Internationale Veröffentlichungsnummer: WO9317403

(56) Entgegenhaltungen:
- EP-A- 0 360 613
- AT-B- 391 218
- DE-A- 4 035 022
- DE-C- 3 441 518
- US-A- 4 575 622

## Beschreibung

Die Erfindung betrifft ein Spielgerätesystem, umfassend eine Anzahl von miteinander vernetzten Spielgeräten mit einer Leseeinrichtung für Benutzerkarten und eine rechnergesteuerte Einheit, die das Guthaben des Benutzers speichert und bei ausreichendem entsprechendem Guthaben ein Spielgerät nach dem Lesen einer Benutzerkarte freigibt, wobei sie das Guthaben entsprechend den vom Spielgerät übermittelten Spieldaten fortschreibt.

Ein derartiges in der DE-C-34 41 518 beschriebenes Spielgerätesystem basiert auf der Verwendung einer Benutzerkarte, die Wertinformationen, d.h. ein Guthaben, enthält. Die entsprechenden Daten werden in einen Speicher einer Datenverarbeitungszentrale eingelesen und Speicher- sowie Spielhallendaten auf der Benutzerkarte aufgezeichnet. Diese Benutzerkarte kann dann in die verschiedenen vernetzten Spielgeräte eingeführt werden, woraufhin jeweils der Rechner das benötigte mit dem gespeicherten Guthaben vergleicht und bei ausreichendem Betrag des Guthabens ein Freigabesignal erzeugt. Daraufhin wird die Benutzerkarte wieder ausgegeben und das entsprechende Spielgerät kann benutzt werden. Hat der Benutzer den Spielbetrieb beendet, so wird die Benutzerkarte wieder gelesen und durch den Rechner geprüft. Das Schlußguthaben wird auf einer entsprechenden Speichereinrichtung der Benutzerkarte eingeschrieben und die in der rechnergesteuerten Einheit gespeicherten Guthabendaten werden gelöscht. Alternativ kann auch nach Gültigkeitsprüfung durch den Rechner das dortige Guthaben gelöscht und der entsprechende Betrag ausgezahlt werden.

Problematisch bei münzbetätigten Geräten ist stets die Bevorratung von Bar- oder Scheingeld im Gerät, denn es müssen Sicherheitsvorkehrungen gegen Manipulationen und Diebstahl getroffen werden. Die entsprechenden Sicherheitsvorrichtungen werden immer aufwendiger und erhöhen auf diese Weise die Herstellungskosten der einzelnen Geräte.

Zur Erhöhung der Sicherheit von geldbetätigten Unterhaltungsautomaten ist es inzwischen bekannt geworden, mehrere geldbetätigte Unterhaltungsautomaten zu einer Automatengruppe zusammenzufassen. Die Gerätegruppe kann dann von einem Spieler simultan bespielt werden. Ausgehend hiervon ist bereits eine Anordnung geldbetätigter Unterhaltungsmaten vorgeschlagen worden, die in einer vorbestimmten Anzahl zu einer Gruppe miteinander verbunden sind und über eine gemeinsame rechnergesteuerte Geldverarbeitungseinrichtung mit Geldeingabe und Geldausgabe bespielbar sind, wobei die Geldeingabe und -ausgabe in einem separaten tresorartigen Zentralgehäuse untergebracht ist. Dies ist in der nichtveröffentlichten DE-A-40 35 022 beschrieben worden.

Auf diese Weise konnte darauf verzichtet werden, die einzelnen Unterhaltungsautomaten mit Münzprüfer, Geldscheinprüfer, Münzspeicher, Geldscheinspeicher, Münzauszahleinrichtung, Geldscheinauszahleinrichtung und/oder Kreditkartenleser zu bestücken. Beachtliche Kosteneinsparungen konnten erzielt werden.

Aus der US-A-4 575 622 ist ein Spielgerätesystem bekannt, bei dem Benutzerkarten zu Identifikationszwecken und zur Guthabenverwaltung in bezug auf den Spielbetrieb eingesetzt werden. Ist das Guthaben einer Karte nicht ausreichend, ist ein Weiterspielen nicht möglich. Durch dieses System soll eine sichere Zugriffskontrolle und Überwachung des Spielgerätebetriebs ermöglicht werden.

Bei einer Einrichtung mit Spielautomaten gemäß AT-B-391 218 werden Kenndaten tragende Karten zur Gewinn- und Verlustabrechnung eingesezt. Die Karten sind mit einem dem jeweiligen Benutzer zugeordneten Code gekennzeichnet und ermöglichen ein Spielen an verschiedenen Spielautomaten.

Ferner ist in der EP-A-0 360 613 ein System zur Übertragung von Spielgerätedaten vorgeschlagen worden, bei dem Benutzerkarten mit Speicher eingesetzt werden. In diesem Speicher werden Fehleingriffe, Maschinenfehlfunktionen und Spielerguthaben gespeichert und er ermöglicht eine zentrale rechnergesteuerte Kontrolle des Systems sowie eine Vereinfachung der Spielerguthabenverwaltung.

Der Erfindung liegt die Aufgabe zugrunde, ein Spielgerätesystem anzugeben, das eine völlig automatische Bedienung der gesamten Spielgeräte bei hohem Sicherheitsstandard für die Geldbevorratung und -ausgabe und flexible Spielbetrieb ermöglicht und zugleich kostengünstig herstellbar ist.

Diese Aufgabe wird erfindungsgemäß bei einem Spielgerätesystem mit den Merkmalen des Anspruchs 1 gelöst. Vorteilhafte Weiterbildungen des erfindungsgemäßen Spielgerätesystems sind Gegenstand der Unteransprüche.

Erfindungsgemäß ist somit ein Spielgerätesystem entwickelt worden, das eine Anzahl von miteinander vernetzten Spielgeräten mit einer Leseeinrichtung für Benutzerkarten und eine rechnergesteuerte Einheit umfaßt, die das Guthaben des Benutzers speichert und bei ausreichendem entsprechendem Guthaben nach dem Lesen einer Benutzerkarte ein Spielgerät freigibt, wobei sie das Guthaben entsprechend den vom Spielgerät übermittelten Spieldaten fortschreibt. Die rechnergesteuerte Einheit ist eine rechnergesteuerte, mit den Spielgeräten vernetzte Geldverarbeitungseinrichtung mit einer Einzahleinheit und eine Auszahleinheit, die in einem separaten, tresorartigen Zentralgehäuse untergebracht ist, und enthält einen Speicher für Benutzerguthaben. Ferner weist die Geldverarbeitungseinrichtung eine Erfassungseinheit für einen über die Einzahleinheit eingegebenen Betrag auf, wobei ein eingegebener Betrag in dem Speicher für Benutzerguthaben gespeichert wird und eine Benutzerkarte mit einem Code entsprechend dem gespeicherten Benutzerguthaben über die Kartenausgabe ausgegeben wird.

Das erfindungsgemäße Spielgerätesystem macht somit von den Vorteilen der Spielgerätevernetzung Gebrauch, d.h. die Statistiken und sämtliche übrigen Daten der einzelnen Spielgeräte können insbesondere automatisch ausgewertet werden, wo-bei die einzelnen Geräte keine eigene Auswerteeinrichtung umfassen müssen. Darüber hinaus wird bei dem erfindungsgemäßen Spielgerätesystem ein Datentransfer zwischen den einzelnen Spielgeräten und der rechnergesteuerten Einheit ausgeführt, d.h. Spielinformationen werden der rechnergesteuerten Einheit zugeführt, und Guthaben- bzw. Geldwertinformationen werden in beiden Richtungen, also bidirektional, übertragen. Dies ermöglicht es, wahlweise an den einzelnen Spielgeräten zu spielen, ohne daß praktische Geldtransaktionen erforderlich sind. Dies ist ermöglicht durch die Verwendung von Benutzerkarten, die die Zuordnung des jeweiligen Benutzers zu einem entsprechenden Guthaben in der rechnergesteuerten Einheit gewährleisten. Die erforderliche Sicherheit des im Spielgerätesystem verwahrten Bargeldes ist dadurch gewährleistet, daß die Geldverarbeitungseinrichtung in einem separaten tresorartigen Zentralgehäuse untergebracht ist. Die Geldverarbeitungsinformationen können auf diese Weise automatisch über die Vernetzung an die Geräte weitergegeben werden. Weiterhin können die Spielgeräte, die als Geldspielautomaten, Flipper, Wurfpfeil-Spielgeräte, Bildschirm-Spielgeräte, Musikautomaten und dergleichen ausgeführt sein können, wahlweise mit oder ohne eigene Geldverarbeitungsanlage ausgerüstet sein. Darüber hinaus besteht die Möglichkeit bereits auf dem Markt befindliche Spielgeräte auf einfache Weise in das erfindungsgemäße Spielgerätesystem zu integrieren, da der bei diesen Geräten verbundene Münzeingabeschlitz nach Ausbau der Geldverarbeitungsanlage und Einbau der Benutzerkarten-Leseeinrichtung als Benutzerkarten-Eingabeschlitz verwendet werden kann. Selbstverständlich ist es auch möglich, Spielgeräte mit eigener Geldverarbeitungsanlage in das Spielgerätesystem zu integrieren.

Dabei weist die Geldverarbeitungseinrichtung eine Einzahleinheit und eine Auszahleinheit auf, die für Hartgeld- und/oder Banknoten vorgesehen ist, wobei das eingegebene Geld über Sortiereinrichtungen geldwertindividuellen Auszahlbehältern der Auszahleinheit zuführbar ist. Will ein Benutzer eines der Spielgeräte den Spielbetrieb aufnehmen, so muß er am Anfang mittels der Geldverarbeitungseinrichtung einen bestimmten Betrag für ein Guthaben einzahlen, das ihm dann gutgeschrieben wird, und er erhält bezüglich dieses Guthabens eine Benutzerkarte über die Kartenausgabe der Geldverarbeitungseinrichtung. Mittels der codierten Benutzerkarte können die Spieler an den verschiedenen Geräten spielen und je nach deren Ausstattung das noch bestehende Guthaben an einer Anzeige ablesen. Obwohl vorgesehen ist, daß sämtliche Geräte über die rechnergesteuerte Geldverarbeitungseinrichtung angesteuert werden, ist es noch möglich, mit einer separaten Geldausgabeeinrichtung versehene Geräte anzuschliessen. Wichtig ist indessen, daß es die codierten Benutzerkarten ermöglichen, einen räumlichen und gerätemäßigen Abstand der einzelnen Spielgeräte zu der zentralen Geldverarbeitungseinrichtung vorsehen zu können, d.h. der eigentliche Sicherheitsbehälter und Tresor ist von dem Spielbetrieb getrennt. Weiterhin kann bevorzugt die Geldverarbeitungseinrichtung als reiner Geldwechsler benutzt werden.

Zweckmäßigerweise wird über die Benutzerkarten-Leseeinrichtung des ausgewählten Spielgerätes der miteinander vernetzten Spielgeräte das Guthaben des Spielers in der Geldverarbeitungseinrichtung auf das ausgesuchte Spielgerät aufgebucht und auf der Basis dieses Guthabens gespielt.

Die Flexibilität der Benutzer ist bevorzugt verbessert, wenn die miteinander vernetzten Spielgeräte jeweils eine Anzeige aufweisen, die bei einer in seiner Leseeinrichtung befindlichen Benutzerkarte das dieser zugeordnete, in der Geldverarbeitungseinrichtung gespeicherte Guthaben anzeigt, wobei die Darstellung des Guthabens gegebenenfalls stufenweise erfolgt.

Bevorzugt sind mit einer Benutzerkarte mehrere Spielgeräte gleichzeitig bespielbar, wobei die in jedem Spielgerät vorhandene Summe aus Gewinn und Guthaben durch Betätigung einer Rückführungstaste unter Beendigung des Spiels in die Geldverarbeitungseinrichtung rückübertragen wird. Alternativ hierzu ist zweckmäßigerweise vorgesehen, daß mit einer Benutzerkarte mehrere Spielgeräte gleichzeitig bespielbar sind, wobei die in jedem Spielgerät vorhandene Summe aus Gewinn und Guthaben nach erneutem Einführen der Benutzerkarte und Betätigung einer Taste unter Spielbeendigung in die Geldverarbeitungseinrichtung rückübertragen wird. Der Guthabenbetrag und der Gewinnbetrag wird also immer mitgeführt. Durch Tastendruck wird das Spiel beendet, so daß der Gesamtbetrag rückübertragen wird oder durch erneutes Einstecken der Benutzerkarte und Tastendruck, um sicherzustellen, daß auch der Code mit rückübertragen wird.

Ein vorteilhaftes Ausführungsbeispiel des erfindungsgemäßen Spielgerätesystems weist eine Kartenleseeinrichtung auf, wobei ein gelesener Code einer in der Kartenleseeinrichtung befindlichen Benutzerkarte mit den Benutzercodes zu vorhandenen Guthaben im Speicher für Benutzerguthaben verglichen wird und bei Vorhandensein eines zugehörigen Guthabens und Eingabe eines Betrags in die Einzahleinheit dieser zu dem gespeicherten Guthabenbetrag addiert wird. Auf diese Weise ist es möglich, daß bei größerem Einsatz oder abnehmendem Guthaben das Guthaben erhöht werden kann, ohne daß ein neues Guthaben bzw. Konto eröffnet werden muß.

Zum Schutz gegen Manipulationen, insbesondere auf der Benutzerkarte, kann vorgesehen sein, daß die Geldverarbeitungseinrichtung eine Einrichtung zum Löschen von Benutzercodes und der zugehörigen Guthaben zu festgelegten Zeitpunkten aufweist. Beispielsweise kann das Löschen abends nach Beendigung des Spielbetriebes erfolgen. Dies zwingt dann die Spieler, beim Verlassen einer Spielhalle oder jedenfalls des Aufstellungsortes ihr Guthaben der Geldverarbeitungseinrichtung zu entnehmen. Der am Ende des Spielbetriebes in der Geldverarbeitungseinrichtung bevorratete Geldbetrag ist somit der tatsächlich aktuelle Geldbetrag, aufgrund dessen die Tagesabrechnung vorgenommen werden kann.

Zweckmäßigerweise weist auch die Geldverarbeitungseinrichtung eine Anzeige auf, die bei einer in der Kartenleseeinrichtung befindichen Benutzerkarte das dieser zugeordnete gespeicherte Guthaben anzeigt. Auf diese Weise kann der Spieler stets zwischendurch die Höhe des Guthabens prüfen und dieses gegebenenfalls erhöhen.

Als Benutzerkarten können Magnetkarten verwendet werden, bei denen das Guthaben und der Gewinn über den Code der Magnetkarte in der Geldverarbeitungseinrichtung mitgeführt wird. Alternativ hierzu kann die Benutzerkarte eine Chipkarte mit einem nichtflüchtigen Chipspeicher, beispielsweise einem EEPROM sein, die wertkodiert ist, und bei der das Guthaben auf der Chipkarte und der Gewinn über den Code der Chipkarte in der Geldverarbeitungseinrichtung mitgeführt wird. Hierbei können die Chipkarten in abgestuften Werteinheiten durch die Geldverarbeitungseinrichtung ausgegeben werden. Beispielsweise kann bei Eingabe von DM 30,-- eine Chipkarte für DM 10,-- und eine Chipkarte für DM 20,-- gekauft werden. Mit diesen Chipkarten können dann zwei verschiedene Spielgeräte bespielt werden.

Die Auswertung des erfindungsgemäßen Spielgerätesystem ist dadurch verbessert, daß die Geldverarbeitungseinrichtung eine Prüfeinrichtung umfaßt, über die zyklisch die Spielgerätedaten, wie Statistiken, Umsatz, Sonderspiele, Sonderspieleserien und dergleichen, erfaßt werden. Hierdurch kann auch zwischentags eine Funktionsülberprüfung vorgenommen werden.

Weiterhin umfaßt die Geldverarbeitungseinrichtung bevorzugt eine Alarmeinrichtung mit automatischer Geräteabschaltung, eine Fehlermeldeeinrichtung mit automatischer Geräteabschaltung, eine Personalkontrolleinrichtung, eine Preiseinstelleinrichtung und gegebenenfalls weitere Kontrolleinrichtungen.. Darüber hinaus weist die Geldverarbeitungseinrichtung zweckmäßigerweise eine Datenerfassungseinrichtung zur Feststellung von Stammspielern auf, die über die Benutzerkarte einen Bonus erhalten.

Vorzugweise weist die Geldverarbeitungseinrichtung entweder eine Schnittstelle für den Anschluß an einen Rechner oder einen internen Rechner auf. Bei dem Rechner kann es sich zum Beispiel um einen Personalcomputer mit einer externen oder internen Bedienerkonsole handeln, über den dann der gesamte Geldverkehr in der Spielhalle abgewickelt werden kann.

Eine zentrale Auswertung des Spielgerätesystems ist dadurch ermöglicht, daß die Geldverarbeitungseinrichtung eine Schnittstelle für die Datenfernübertragung über ein Modem an einen Heim-Personalcomputer aufweist.

Zweckmäßigerweise ist die Vernetzung der Spielgeräte über gerätespezifische Schnittstellen oder Interfaces (Revisor--Platinen) durchführbar.

Die Erfindung wird im folgenden anhand zweier Ausführungs-Beispiele, die in der Zeichnung dargestellt sind, näher beschrieben. Es zeigt:

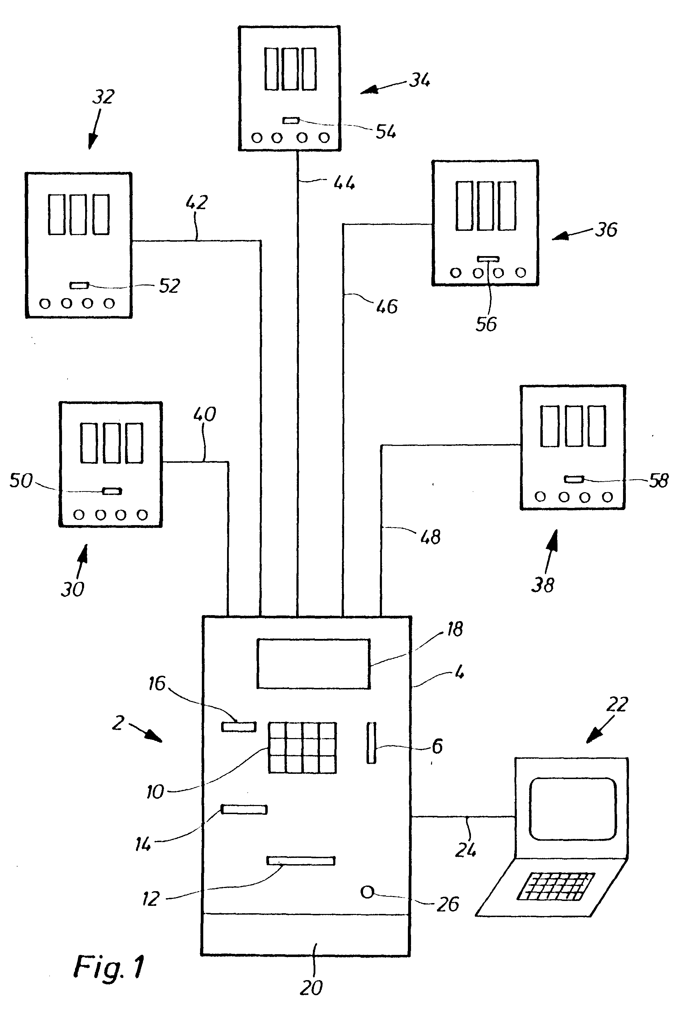

- Fig. 1: ein Spielgerätesystem mit vernetzten Spielgeräten und einer rechnergesteuerten Geldverarbeitungseinrichtung und
- Fig. 2: ein mit einer Ringleitung ausgerüstetes Spielgerätesystem nach Fig. 1

Eine Geldverarbeitungseinrichtung 2 ist mit einem tresorartigen Gehäuse 4 versehen. Für die Münzeingabe ist ein Münzeinwurf 6 im rechten mittleren Bereich der Frontplatte angeordnet. Ein Tastenfeld 10 ist für die Eingabe von Befehlen oder Kontrolldaten vorgesehen. Ein Schlitz 12 dient als Einlaß für die Kartenleseeinrichtung. Im linken Bereich der Frontplatte befindet sich eine Scheinausgabe 14, oberhalb der sich eine Scheineingabe 16 eines Banknotenprüfers angeordnet ist. Oberhalb der Scheineingabe 16, des lastenfeldes 10 und des Münzeinwurfs 6 liegt eine Anzeige 18. Der unterste Bereich des Gehäuses 4 umfaßt eine Ausgabe 20 für die Münzrückgabe oder Wechselgeldausgabe sowie die Benutzerkartenausgabe.

Die Geldverarbeitungseinrichtung 2 ist mit einer nicht dargestellten Schnittstelle für den Anschluß an einen Rechner 22 über eine Leitung 24 versehen. Bei dem Rechner 22 handelt es sich um einen Personalcomputer, der als Zentrale dient und über den in Verbindung mit der Geldverarbeitungseinrichtung der gesamte Geldverkehr eines hierüber gesteuerten Spielgerätesystems abgewickelt werden kann.

An die Geldverarbeitungseinrichtung 2 ist eine Anzahl von miteinander vernetzten Spielgeräten 30, 32, 34, 36, 38 über Leitungen 40, 42, 44, 46, 48 angeschlossen. Die Spielgeräte 30, 32, 34, 36 sind sämtlich mit einem Schlitz 50, 52, 54, 56, 58 für eine Benutzerkarte ausgestattet.

Der Spielbetrieb läuft bei dem oben beschriebenen Spielgerätesystem auf folgende Weise ab. Über die Eingaben 6, 16 gibt ein Spieler einen bestimmten Betrag für ein durch die Geldverarbeitungseinrichtung 2 zu verwaltendes Guthaben ein und erhält eine Benutzerkarte mit einem bestimmten Code zur Identifizierung, der eine Zuordnung zu dem betreffenden Guthaben ermöglicht. Will der Spieler nun spielen, steckt er die Benutzerkarte in den zugehörigen Schlitz 50, 52, 54, 56 bzw. 58 des ausgesuchten Spielgerätes 30, 32, 34, 36 bzw. 38. Über die Leitung 40, 42, 44, 46 bzw. 48 wird das Guthaben des Spielers in der Geldverarbeitungseinrichtung 2 auf das betreffende Spielgerät aufgebucht und auf Basis dieses Guthabens gespielt. Mit der Entnahme der Benutzerkarte aus dem Schlitz des ausgesuchten Spielgerätes werden die am Spielgerät erzielten Gewinne und das Restguthaben wieder dem Spielerkonto in der Geldverarbeitungsanlage 2 gutgeschrieben. Ist der Restbetrag des Guthabens nicht ausreichend, so wird der betreffende Spielbetrieb des Gerätes nicht zugelassen. Dies bedeutet, daß die Benutzerkarte die Funktion eines elektronischen Schlüssels im Sinne einer Freigabeeinrichtung hat.

Der Spieler kann ohne irgendwelchen besonderen Aufwand von Spielgerät zu Spielgerät wechseln und auf Basis eines einzigen dem Gesamtsystem zugeordneten Guthabens spielen, so daß er mit Geldmanipulationen überhaupt nicht befaßt ist und sich ganz dem Spiel hingeben kann.

Hat der Spieler entschieden, daß er nicht weiterspielen möchte, so kann er seine Benutzerkarte in den Schlitz 12 an der Geldverarbeitungseinrichtung 2 stecken und mittels der Bedienungstaste 26 die Geldausgabe veranlassen. Die Benutzerkarte wird dann gelöscht und ist wiederbenutzbar. Daher kann sie dem Kartenvorrat zugeführt werden.

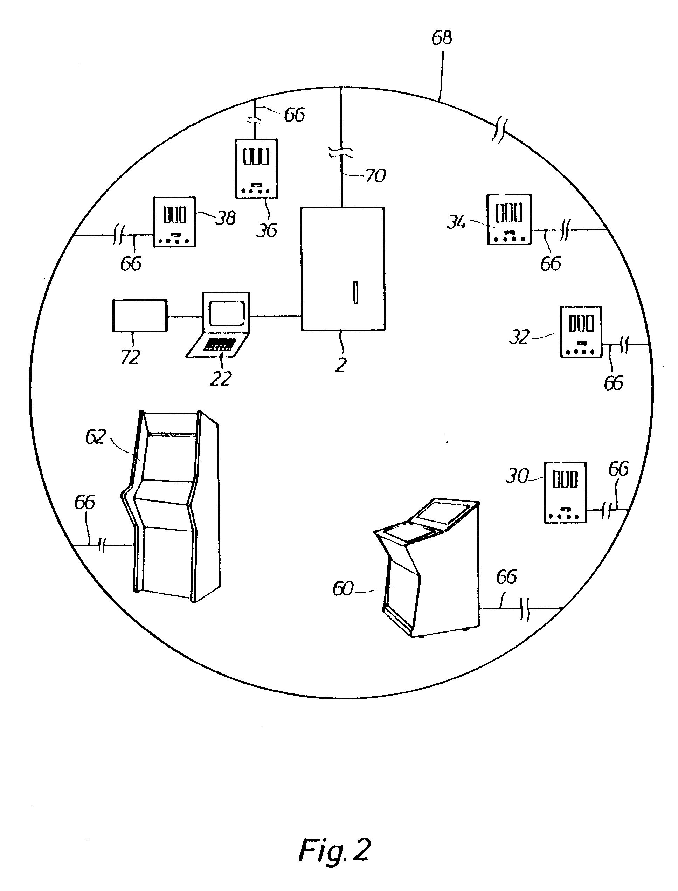

Bei der in Fig. 2 dargestellten Ausführung des Spielgerätesystems sind die als Geldspielautomaten ausgeführten Spielgeräte 30, 32, 34, 38 und die als Musikautomat oder Video--Spielgerät ausgeführten Spielgeräte 60, 62, jeweils über eine Stichleitung 66 an eine Ringleitung 68 angeschlossen, von der aus eine weitere Stichleitung 70 zu der Geldverarbeitungseinrichtung 2 führt. An die Geldverarbeitungseinrichtung 2 ist ein Personalcomputer 22 und ein Modem 72 angeschlossen. Hierbei kann die Ringleitung unter Putz verlegt werden, wodurch sie manipulationssicher verdeckt ist. Darüber hinaus kann bei Ausfall eines Gerätes dieses leicht durch Trennung der Stichleitung 66 von der Ringleitung 68 aus dem Spielgerätesystem zu Reparaturzwecken entfernt werden.

Obige Beschreibung zeigt deutlich, daß einerseits der Spieler nicht bei jedem Spielgerät neu Geld eingeben muß und andererseits der Geräteaufsteller nicht in jedem Spielgerät Geld aufbewahren und sicherstellen muß. Vielmehr ermöglicht es die zentrale Geldverarbeitungseinrichtung die gesamten Münz- und Scheinvorräte in deren Tresor aufzubewahren.

Zusammengefaßt ist die rechnergesteuerte Einheit eine rechnergesteuerte Geldverarbeitungseinrichtung mit einer Einzahleinheit und einer Auszahleinheit, die in einem separaten, tresorartigen Zentralgehäuse untergebracht ist und enthält einen Speicher für Benutzerguthaben. Ferner weist die Geldverarbeitungseinrichtung eine Erfassungseinneit für einen über die Einzahleinheit eingegebenen Betrag auf, wobei ein eingegebener Betrag in dem Speicher für Benutzerguthaben gespeichert wird und eine Benutzerkarte mit einem Code entsprechend dem gespeicherten Benutzerguthaben über die Kartenausgabe ausgegeben wird. Hierbei ist es auch möglich, bei entsprechender Ausrüstung der Spielgeräte mit einer Benutzerkarte gleichzeitig mehrere Spielgeräte zu betätigen. Weiterhin kann die Geldverarbeitungseinrichtung als reiner Geldwechsler betrieben werden.

## Patentansprüche

1. Spielgerätesystem, umfassend
- eine Anzahl von miteinander vernetzten Spielgeräten mit einer Leseeinrichtung für Benutzerkarten und
- einer rechnergesteuerten, mit den Spielgeräten (30, 32, 34, 36, 38 60, 62, 64) vernetzten Geldverarbeitungseinrichtung (2) mit einer Einzahleinheit (6, 16) und einer Auszahleinheit (14, 20), die
. das Guthaben des Benutzers speichert und bei ausreichendem entsprechendem Guthaben ein Spielgerät nach dem Lesen einer Benutzerkarte freigibt, wobei sie das Guthaben entsprechend den vom Spielgerät übermittelten Spieldaten fortschreibt,
. einen Vorrat an Benutzerkarten und eine Kartenausgabe enthält,
. einen Speicher für Benutzerguthaben aufweist und
. eine Erfassungseinheit für einen über die Einzahleinheit eingegebenen Betrag aufweist, wobei ein eingegebener Betrag in dem Speicher für Benutzerguthaben gespeichert wird und eine Benutzerkarte mit einem Code entsprechend dem gespeicherten Benutzerguthaben über die Kartenausgabe ausgegeben wird,
dadurch **gekennzeichnet**, daß
- die Spielgeräte jeweils eine Anzeige aufweisen, die bei einer in seiner Leseeinrichtung befindlichen Benutzerkarte das dieser zugeordnete, in der Geldverarbeitungseinrichtung gespeicherte Guthaben anzeigt, wobei die Darstellung des Guthabens gegebenenfalls stufenweise erfolgt,
- mit einer Benutzerkarte mehrere Spielgeräte gleichzeitig bespielbar sind, wobei die in jedem Spielgerät vorhandene Summe aus Gewinn und Guthaben auf einen Befehl des Spielers unter Beendigung des Spiels in die Geldverarbeitungseinrichtung rückübertragen wird,
- die Geldverarbeitungseinrichtung (2) eine Einrichtung zum Löschen von Benutzercodes und der zugehörigen Guthaben zu festgelegten Zeitpunkten aufweist,
- die Geldverarbeitungseinrichtung in einem separaten, tresorartigen Zentralgehäuse (4) untergebracht ist und
- die Geldverarbeitungseinrichtung (2) eine Alarmeinrichtung mit automatischer Geräteabschaltung, eine Fehlermeldeeinrichtung mit automatischer Geräteabschaltung, eine Personalkontrolleinrichtung, eine Preiseinstelleinrichtunq und gegebenenfalls weitere Kontrolleinrichtungen umfaßt.

2. Spielgerätesystem nach Anspruch 1, dadurch **gekennzeichnet,** daß die Geldverarbeitungseinrichtung eine Einzahleinheit (6, 16) und eine Auszahleinheit (14, 20) für Hartgeld und/oder Banknoten aufweist, wobei das eingegebene Geld über Sortiereinrichtungen geldwertindividuellen Auszahlbehältern der Auszahleinheit (14, 20) zuführbar ist.

3. Spielgerätesystem nach Anspruch 1 oder 2, dadurch **gekennzeichnet**, daß die Geldverarbeitungseinrichtung (2) als reiner Geldwechsler bedienbar ist.

4. Spielgerätesystem nach einem der Ansprüche 1 bis 4, dadurch **gekennzeichnet** , daß über die Benutzerkarten-Leseeinrichtung des ausgewählten Spielgerätes der miteinander vernetzten Spielgeräte das Guthaben des Spielers in der Geldverarbeitungseinrichtung (2) auf das ausgesuchte Spielgerät aufgebucht und auf der Basis dieses Guthabens gespielt wird.

5. Spielgerätesystem nach einem der Ansprüche 1 bis 4, dadurch gekennzeichnet, daß mit einer Benutzerkarte mehrere Spielgeräte gleichzeitig bespielbar sind, wobei die in jedem Spielgerät vorhandene Summe aus Gewinn und Guthaben nach erneutem Einführen der Benutzerkarte und Betätigung einer Taste unter Spielbeendigung in die Geldverarbeitungseinrichtung rückübertragen wird.

6. Spielgerätesystem nach einem der Ansprüche 1 bis 5, dadurch gekennzeichnet, daß die Geldverarbeitungseinrichtung (2) eine Kartenleseeinrichtung (4) aufweist, wobei ein gelesener Code einer in der Kartenleseeinrichtung befindlichen Benutzerkarte mit den Benutzercodes zu vorhandenen Guthaben im Speicher für Benutzerguthaben verglichen wird und bei Vorhandensein eines zugehörigen Guthabens und Eingabe eines Betrags in die Einzahleinheit dieser zu dem gespeicherten Guthabenbetrag addiert wird.

7. Spielgerätesystem nach Anspruch 6, dadurch gekennzeichnet, daß die Geldverarbeitungseinrichtung (2) eine Anzeige (18) aufweist, die bei einer in der Kartenleseeinrichtung befindlichen Benutzerkarte das dieser zugeordnete gespeicherte Guthaben anzeigt.

8. Spielgerätesystem nach einem der Ansprüche 1 bis 7, dadurch gekennzeichnet, daß die Benutzerkarte eine Magnetkarte ist.

9. Spielgerätesystem nach Anspruch 8, dadurch gekennzeichnet, daß bei Einsatz der Magnetkarte das Guthaben und der Gewinn über den Code der Magnetkarte in der Geldverarbeitungseinrichtung (2) mitgeführt wird.

10. Spielgerätesystem nach einem der Ansprüche 1 bis 9, dadurch gekennzeichnet, daß die Benutzerkarte eine Chipkarte mit einem nichtflüchtigen Chipspeicher ist.

11. Spielgerätesystem nach Anspruch 10, dadurch gekennzeichnet, daß die Chipkarte wertkodiert ist.

12. Spielgerätesystem nach den Ansprüchen 10 und 11, dadurch gekennzeichnet, daß bei Einsatz der Chipkarte das Guthaben auf der Chipkarte und der Gewinn über den Code der Chipkarte in der Geldverarbeitungseinrichtung (2) mitgeführt wird.

13. Spielgerätesystem nach den Ansprüchen 10 bis 12, dadurch gekenntzeichnet, daß die Chipkarten in abgestuften Werteinheiten durch die Geldverarbeitungseinrichtung (2) ausgebbar sind.

14. Spielgerätesystem nach einem der Ansprüche 1 bis 13, dadurch gekennzeichnet, daß die Geldverarbeitungseinrichtung (2) eine Prüfeinrichtung umfaßt, über die zyklisch die Spielgerätedaten, wie Statistik, Umsatz, Sonderspiele, Sonderspieleserien und dergleichen, erfaßt werden.

15. Spielgerätesystem nach einem der Ansprüche 1 bis 14, dadurch gekennzeichnet, daß die Geldverarbeitungseinrichtung (2) eine Datenerfassungseinrichtung zur Feststellung von Stammspielern aufweist, die über die Benutzerkarte einen Bonus erhalten.

16. Spielgerätesystem nach einem der Ansprüche 1 bis 15, dadurch gekennzeichnet, daß die Geldverarbeitungseinrichtung (2) entweder eine Schnlittstelle für den Anschluß an einem Rechner (22) oder einen internen Rechner aufweist.

17. Spielgerätesystem nach einem der Ansprüche 1 bis 16, dadurch gekennzeichnet, daß der Geldverarbeitungseinrichtung (2) ein interner Rechner mit einer externen Bedienerkonsole zugeordnet ist, wobei die Bedienerkonsole über eine Schnittstelle der Geldverarbeitungseinrichtung (2) an den Rechner anschliellßar ist.

18. Spielgerätesystem nach einem der Ansprüche 1 bis 17, dadurch gekennzeichnet, daß die Geldverarbeitungseinrichtung (2) eine Schnittstelle für die Datenfernübertragung über ein Modem an einen Heim-Personialcomputer aufweist..

19. Spielgerätesystem nach einem oder mehreren der Ansprüche 1 bis 18, dadurch gekennzeichnet, daß die Vernetzung der Spielgeräte über gerätespezifische Schnittstellen oder Interfaces (Revisor-Platinen) durchführbar ist.

## Claims

1. Gaming machine system, including
- a number of interlinked gaming machines having a reading means for reading user cards and
- a computer-controlled money processing arrangement (2), which is linked with the gaming machines (30, 32, 34, 36, 38, 60, 62, 64) and provided with a paying-in unit (6, 16) and a paying-out unit (14, 20), which arrangement
. stores the credit of the user and releases a gaming machine after a user card has been read if there is sufficient corresponding credit, whereby it updates the credit according to the data of the games transmitted by the gaming machine,
. contains a stock of user cards and a card dispenser,
. has a store for user credit, and
. has a collecting unit for an amount which is input via the paying-in unit, whereby an input amount is stored in the store for user credit, and a user card having a code corresponding to the stored user credit is issued via the card dispenser,
characterised in that
- the gaming machines each have an indicator which, when a user card is in its reading means, indicates the credit associated with such card and stored in the money processing arrangement, whereby the representation of the credit is possibly effected incrementally,
- a plurality of gaming machines can be simultaneously played with one user card, whereby the sum of wins and credits in each gaming machine is fed back to the money processing arrangement on a command of the player to terminate the game,
- the money processing arrangement (2) has a means for cancelling user codes and the associated credits at prescribed times,
- the money processing arrangement is accommodated in a separate, safe-like central housing (4), and
- the money processing arrangement (2) includes an alarm system with a means for automatically switching-off the machines, an error indicating arrangement with a means for automatically switching-off the machines, a personal control means, a price-adjusting means and possibly additional control means.

2. Gaming machine system according to claim 1, characterised in that the money processing arrangement has a paying-in unit (6, 16) and a paying-out unit (14, 20) for coins and/or banknotes, whereby the input money is suppliable to individual paying-out containers for specific cash values of the paying-out unit (14, 20) via sorting means.

3. Gaming machine system according to claim 1 or 2, characterised in that the money processing arrangement (2) can be used as a money changer.

4. Gaming machine system according to one of claims 1 to 4, characterised in that the credit of the player in the money processing arrangement (2) is credited to the selected gaming machine via the user card reading means of the selected gaming machine of the interlinked gaming machines, and the game is played on the basis of this credit.

5. Gaming machine system according to one of claims 1 to 4, characterised in that a plurality of gaming machines can be played simultaneously with one user card, whereby the sum of wins and credits in each gaming machine is fed back to the money processing arrangement after a re-insertion of the user card and after a key has been actuated to terminate the game.

6. Gaming machine system according to one of claims 1 to 5, characterised in that the money processing arrangement (2) has a card reading means (4), whereby a code, which has been read, of a user card in the card reading means is compared with the user code relating to existing credits in the store for user credits and, if an associated credit exists, and if an amount is fed into the paying-in unit, this amount is added to the stored credit amount.

7. Gaming machine system according to claim 6, characterised in that the money processing arrangement (2) has an indicator (18) which, when a user card is in the card reading means, indicates the stored credit associated with said card.

8. Gaming machine system according to one of claims 1 to 7, characterised in that the user card is a magnetic card.

9. Gaming machine system according to claim 8, characterised in that, when the magnetic card is inserted, the credit and the win are jointly carried in the money processing arrangement (2) via the code of the magnetic card.

10. Gaming machine system according to one of claims 1 to 9, characterised in that the user card is a chip card having a non-volatile memory chip.

11. Gaming machine system according to claim 10, characterised in that the chip card is value-coded.

12. Gaming machine system according to claims 10 and 11, characterised in that, when a chip card is introduced, the credit on the chip card and the win are jointly carried in the money processing arrangement (2) via the code of the chip card.

13. Gaming machine system according to claims 10 to 12, characterised in that the chip cards are dispensable in graded denominations by the money processing arrangement (2).

14. Gaming machine system according to one of claims 1 to 13, characterised in that the money processing arrangement (2) includes a testing means, via which the gaming machine data, such as statistics, turnover, special games, series of special games and the like, are collected cyclically.

15. Gaming machine system according to one of claims 1 to 14, characterised in that the money processing arrangement (2) has a data collecting means for determining regular players who receive a bonus via the user card.

16. Gaming machine system according to one of claims 1 to 15, characterised in that the money processing arrangement (2) either has an interface for communication with a computer (22) or has an internal computer.

17. Gaming machine system according to one of claims 1 to 16, characterised in that the money processing arrangement (2) has associated therewith an internal computer with an external operator control panel, whereby the operator control panel can communicate with the computer via an interface of the money processing arrangement (2).

18. Gaming machine system according to one of claims 1 to 17, characterised in that the money processing arrangement (2) has an interface for the remote transmission of data to a personal computer for home use via a modem.

19. Gaming machine system according to one or more of claims 1 to 18, characterised in that the linking of the gaming machines can be effected via machine specific interfaces or interface cards (adaptor cards).

## Revendications

1. Système de machines à sous comportant
- un nombre de machines à sous montées en réseau avec un dispositif de lecture de cartes d'utilisateur et
- un dispositif de traitement d'argent (2) commandé par ordinateur, monté en réseau avec les machines à sous (30, 32, 34, 36, 38, 60, 62, 64) avec une unité de paiement (6, 16) et une unité de rendu de monnaie (14, 20), qui
. mémorise le crédit de l'utilisateur et en cas de crédit correspondant suffisant autorise une machine à sous après lecture d'une carte d'utilisateur, en mettant à jour le crédit conformément aux données de jeu transmises par la machine à sous,
. contient une réserve de cartes d'utilisateur et un distributeur de cartes,
. comporte une mémoire pour le crédit de l'utilisateur et
. comporte une unité de saisie pour une somme introduite par l'intermédiaire de l'unité de paiement, une somme introduite étant stockée dans la mémoire du crédit de l'utilisateur et une carte d'utilisateur avec un code étant délivrée par le distributeur de cartes, conformément au crédit mémorisé de l'utilisateur,
caractérisé en ce que
- les machines à sous comportent chacune un affichage qui, dans le cas où une carte d'utilisateur se trouve dans son dispositif de lecture, indique le crédit qui lui est alloué, mémorisé dans le dispositif de traitement d'argent, la représentation du crédit s'effectuant éventuellement progressivement,
- avec une carte d'utilisateur il est possible de jouer simultanément sur plusieurs machines à sous, la somme du gain et du crédit, présente dans chaque machine à sous, étant reportée sur une instruction du joueur, à la fin du jeu, dans le dispositif de traitement d'argent,
- le dispositif de traitement d'argent (2) comporte un dispositif d'effaçage du code utilisateur et du crédit correspondant à des instants définis,
- le dispositif de traitement d'argent est logé dans un boîtier central (4) séparé, du type d'un coffre-fort, et
- le dispositif de traitement d'argent (2) comporte un dispositif d'alarme avec coupure automatique de la machine, un dispositif de signalisation de défaut avec coupure automatique de la machine, un dispositif de contrôle du personnel, un dispositif de sélection du prix et éventuellement d'autres dispositifs de contrôle.

2. Système de machines à sous selon la revendication 1, caractérisé en ce que le dispositif de traitement d'argent comporte une unité de paiement (6, 16) et une unité de rendu de monnaie (14, 20) pour les pièces de monnaie et/ou les billets de banque, l'argent introduit étant envoyé par des dispositifs de tri à des conteneurs de rendu de monnaie individuels de l'unité de rendu de monnaie (14, 20), suivant la valeur de l'argent.

3. Système de machines à sous selon les revendications 1 ou 2, caractérisé en ce que le dispositif de traitement d'argent (2) est utilisable comme un simple changeur de monnaie.

4. Système de machines à sous selon l'une des revendications 1 à 4, caractérisé en ce que, par le dispositif de lecture des cartes d'utilisateur de la machine à sous sélectionnée des machines à sous reliées entre elles en réseau, le crédit du joueur est crédité dans le dispositif de traitement d'argent (2) à la machine à sous sélectionnée et il est joué sur la base de ce crédit.

5. Système de machines à sous selon l'une des revendications 1 à 4, caractérisé en ce qu'il est possible de jouer simultanément avec une carte d'utilisateur sur plusieurs machines à sous, la somme du gain et du crédit, présente dans chaque machine à sous, étant reportée dans le dispositif de traitement d'argent après nouvelle introduction de la carte d'utilisateur et actionnement d'une touche, en mettant fin au jeu.

6. Système de machines à sous selon l'une des revendications 1 à 5, caractérisé en ce que le dispositif de traitement d'argent (2) comporte un dispositif de lecture de cartes (4), un code lu d'une carte d'utilisateur se trouvant dans le dispositif de lecture de cartes étant comparé aux codes d'utilisateur relatifs aux crédits se trouvant dans la mémoire des crédits des utilisateurs et, en présence d'un crédit correspondant et introduction d'une somme dans l'unité de paiement, celle-ci est additionnée à la somme du crédit mémorisé.

7. Système de machines à sous selon la revendication 6, caractérisé en ce que le dispositif de traitement d'argent (2) présente un affichage (18), qui dans le cas où une carte d'utilisateur se trouve dans le dispositif de lecture de carte, indique le crédit mémorisé, alloué à celle-ci.

8. Système de machines à sous selon l'une des revendications 1 à 7, caractérisé en ce que la carte d'utilisateur est une carte magnétique.

9. Système de machines à sous selon la revendication 8, caractérisé en ce que dans le cas d'une utilisation de la carte magnétique, le crédit et le gain sont introduits, par le code de la carte magnétique, dans le dispositif de traitement d'argent (2).

10. Système de machines à sous selon l'une des revendications 1 à 9, caractérisé en ce que la carte d'utilisateur est une carte à puce avec une mémoire à puce non volatile.

11. Système de machines à sous selon la revendication 10, caractérisé en ce que la carte à puce est codée.

12. Système de machines à sous selon les revendications 10 et 11, caractérisé en ce que dans le cas d'une utilisation de la carte à puce le crédit sur la carte à puce et le gain sont introduits par le code de la carte à puce dans le dispositif de traitement d'argent (2).

13. Système de machines à sous selon les revendications 10 à 12, caractérisé en ce que les cartes à puce sont délivrables en unités de valeurs échelonnées par le dispositif de traitement d'argent (2).

14. Système de machines à sous selon l'une des revendications 1 à 13, caractérisé en ce que le dispositif de traitement d'argent (2) comprend un dispositif de vérification, par lequel les données des machines à sous, telles que les statistiques, le chiffre d'affaire, les jeux spéciaux, les séries de jeux spéciaux et similaires, sont enregistrées cycliquement.

15. Système de machines à sous selon l'une des revendications 1 à 14, caractérisé en ce que le dispositif de traitement d'argent (2) comporte un dispositif d'enregistrement de données pour constater les joueurs fidèles qui par la carte d'utilisateur reçoivent un bonus.

16. Système de machines à sous selon l'une des revendications 1 à 15, caractérisé en ce que le dispositif de traitement d'argent (2) comporte soit une interface pour la connexion à un calculateur (22), soit un calculateur interne.

17. Système de machines à sous selon l'une des revendications 1 à 16, caractérisé en ce qu'au dispositif de traitement d'argent (2) est associé un calculateur interne avec une console de commande externe, la console de commande étant connectable au calculateur par une interface du dispositif de traitement d'argent (2).

18. Système de machines à sous selon l'une des revendications 1 à 17, caractérisé en ce que le dispositif de traitement d'argent (2) comporte une interface pour la télétransmission de données par un modem depuis un ordinateur individuel domestique.

19. Système de machines à sous selon l'une ou plusieurs des revendications 1 à 18, caractérisé en ce que la mise en réseau des machines à sous est réalisable par des interfaces spécifiques aux machines ou par des interfaces (platines correctrices).
